(19) Europäisches Patentamt
European Patent Office
Office européen des brevets

(11) **EP 2 945 327 A1**

(12) **EUROPEAN PATENT APPLICATION**
published in accordance with Art. 153(4) EPC

(43) Date of publication:
**18.11.2015 Bulletin 2015/47**

(51) Int Cl.:
***H04L 12/70*** (2013.01)

(21) Application number: **13885731.3**

(22) Date of filing: **25.09.2013**

(86) International application number:
**PCT/CN2013/084142**

(87) International publication number:
**WO 2014/190642 (04.12.2014 Gazette 2014/49)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **28.05.2013 CN 201310203923**

(71) Applicant: **Huawei Technologies Co., Ltd.
Longgang District
Shenzhen, Guangdong 518129 (CN)**

(72) Inventors:
• **FAN, Yuqun
Shenzhen
Guangdong 518129 (CN)**
• **ZHOU, Lei
Shenzhen
Guangdong 518129 (CN)**

(74) Representative: **Haley, Stephen
Gill Jennings & Every LLP
The Broadgate Tower
20 Primrose Street
London EC2A 2ES (GB)**

(54) **MEDIA DATA TRANSMISSION METHOD, APPARATUS AND SYSTEM**

(57) The present invention discloses a method for transmitting media data, where the method includes: acquiring media quality information, where the media quality information indicates media quality of a media data stream; acquiring a user quality of experience target of a user equipment; obtaining a transmission requirement of the media data stream of the user equipment according to the media quality information and the user quality of experience target of the user equipment; and sending the transmission requirement of the media data stream of the user equipment and the media data stream to a data node, so that the data node sends the media data stream to the user equipment according to the transmission requirement of the media data stream of the user equipment. The transmission method according to an embodiment of the present invention achieves an effect of guaranteeing user quality of experience with consumption of less system resources. The present invention also discloses an apparatus and a system for transmitting media data.

FIG. 2

## Description

This application claims priority to Chinese Patent Application No. 201310203923.2, filed with the Chinese Patent Office on May 28, 2013 and entitled "METHOD, APPARATUS AND SYSTEM FOR TRANSMITTING MEDIA DATA", which is incorporated herein by reference in its entirety.

## TECHNICAL FIELD

The present invention relates to wireless network communications in a communications system, and in particular to, a method, an apparatus, and a system for transmitting media data.

## BACKGROUND

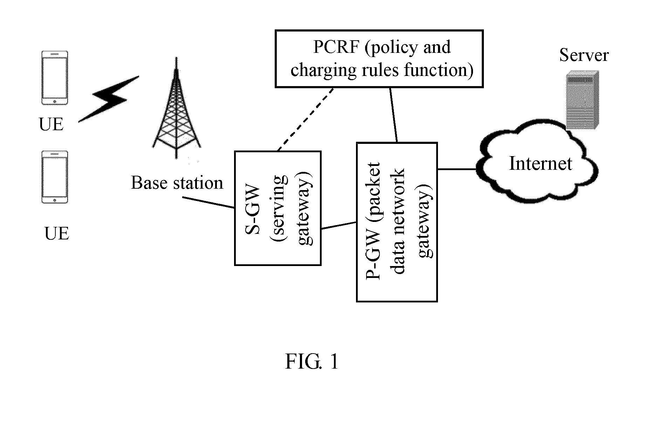

Wireless communications is widely used around the world, which greatly facilitates communication between people. The wireless communications can provide various services, including voice calls and web page downloading. A typical wireless communications system or network, such as an LTE (long term evolution, Long Term Evolution) system, provides radio link connections for a plurality of UEs (user equipment, user equipment) in a cell by using a base station, so as to implement wireless communications. Such a radio connection usually uses a shared radio spectrum. As shown in FIG. 1, a base station uses a same radio frequency band to provide a wireless data communications service for a plurality of (two shown in the figure) UEs. Data downloaded by a UE from a server reaches the base station through the Internet, a P-GW (Packet Data Network Gateway, packet data network gateway), and an S-GW (Serving Gateway, serving gateway), and then is sent to the UE through the base station. Different from an old second-generation wireless communications system, such as a GSM (Global System for Mobile Communications, Global System for Mobile Communications), the LTE system supports only a PS (packet switching, packet switched) connection and no longer supports a CS (circuit switching, circuit switched) connection. For the CS connection, a resource needs to be reserved to ensure data transmission; the reserved resource cannot be released even though a sending end has no data to transmit. For the PS connection, a resource does not need to be reserved, and therefore utilization efficiency of a radio spectrum can be improved. To provide different QoS (Quality of Service, quality of service), the LTE system maps different services to different tunnels (tunnel), so as to implement different processing. Nine different QoS characteristics (characteristics) are defined in the LTE. In the prior art, delay and packet loss requirements of a video service are classified in a unified manner, without considering a characteristic of a video of the provided service: data volume and quality of the video both fluctuate. This video fluctuation characteristic leads to different delay and packet loss requirements at different moments during transmission of video data. For different delay and packet loss requirements, corresponding system resource allocation should also be different; therefore, the prior art in which limited system resources are not allocated according to a characteristic of a video leads to low resource utilization, and a stable playing effect on a UE cannot be ensured.

A video transmission service in a wireless communications environment has been widely used with popularity of smartphones. Transmission technologies of video on demand, video on-live, or video conference services may be roughly divided into two types: one type is a traditional RTP/UDP-based transmission technology, and the other type is HTTP/TCP-based DASH (Dynamic Adaptive Streaming through HTTP protocol, Dynamic Adaptive Streaming over HTTP) that emerges recently. Regardless of which technology is used during a transmission process, due to a characteristic of a video service that a data volume is large and a characteristic of wireless communications that resources are limited, in a case in which a plurality of users share a resource, video data loss or delay occurs frequently because wireless resources are insufficient and allocation is unreasonable, causing that user video experience cannot be ensured.

## SUMMARY

In view of this, to solve the foregoing problem, embodiments of the present invention provide a method, an apparatus, and a system for transmitting media data. According to the method, the apparatus, and the system in the embodiments of the present invention, on the basis of guarantee of user QoE (Quality of Experience, quality of experience), a scarceness characteristic of wireless resources is fully considered to implement optimization on allocation of the wireless resources, thereby achieving an effect of guaranteeing the user QoE with consumption of as few system resources as possible.

An embodiment in a first aspect of the present invention discloses a method for transmitting media data, where the method includes:

acquiring media quality information, where the media quality information indicates media quality of a media data stream; acquiring a user quality of experience target of a user equipment; obtaining a transmission requirement of the media data stream of the user equipment according to the media quality information and the user quality of experience target of the user equipment; and sending the transmission requirement of the media data stream of the user equipment and the media data stream to a data node, so that the data node sends the media data stream to the user equipment according to the transmission requirement of the media data stream of the user equipment.

According to the method for transmitting media data in the embodiment in the first aspect of the present invention, on the basis of guarantee of user QoE (Quality of Experience, quality of experience), a scarceness characteristic of wireless resources is fully considered to implement optimization on allocation of the wireless resources, thereby achieving an effect of guaranteeing the user QoE with consumption of as few system resources as possible.

In a first possible implementation manner of the embodiment in the first aspect of the present invention, the acquiring media quality information specifically includes:

receiving a media presentation description file sent by a server, parsing the media presentation description file to obtain media quality information of each video segment of each code stream in the media data stream;
or
acquiring the media data stream; and
parsing the acquired media data stream to obtain the media quality information of the media data stream.

With reference to a second possible implementation manner of the embodiment in the first aspect of the present invention in the foregoing embodiments, the acquiring a user quality of experience target of a user equipment includes:

acquiring the user quality of experience target of the user equipment by means of negotiation with the user equipment;
or
acquiring the user quality of experience target of the user equipment according to preset subscription information of the user equipment.

With reference to a third possible implementation manner of the embodiment in the first aspect of the present invention in the foregoing embodiments, the transmission requirement includes at least one of the following: a delay requirement and a packet loss requirement.

With reference to a fourth possible implementation manner of the embodiment in the first aspect of the present invention in the foregoing embodiments, when the transmission requirement includes the delay requirement, the obtaining a transmission requirement of the media data stream of the user equipment according to the media quality information and the user quality of experience target of the user equipment includes:

calculating, according to the media quality information, maximum user quality of experience that the media data stream can reach; and
obtaining the delay requirement of the media data stream of the user equipment according to the user quality of experience target and the maximum user quality of experience.

With reference to a fifth possible implementation manner of the embodiment in the first aspect of the present invention in the foregoing embodiments, when the transmission requirement includes the packet loss requirement, the obtaining a transmission requirement of the media data stream of the user equipment according to the media quality information and the user quality of experience target of the user equipment includes:

calculating, according to the media quality information, maximum user quality of experience that the media data stream can reach; and
obtaining the packet loss requirement of the media data stream of the user equipment according to the user quality of experience target and the maximum user quality of experience.

With reference to a sixth possible implementation manner of the embodiment in the first aspect of the present invention in the foregoing embodiments, after the acquiring media quality information, the method further includes:

acquiring play status information of the user equipment; and
correspondingly, the obtaining a transmission requirement of the media data stream of the user equipment according to the media quality information and the user quality of experience target of the user equipment includes: obtaining the transmission requirement of the media data stream of the user equipment according to the media quality information, the play status information of the user equipment, and the user quality of experience target of the user equipment.

With reference to the sixth possible implementation manner of the embodiment in the first aspect of the present invention in the foregoing embodiments, the media play status information includes allowable play time of media temporarily stored by a player of the user equipment, and the obtaining the transmission requirement of the media data stream of the user equipment according to the media quality information, the play status information of the user equipment, and the user quality of experience target of the user equipment includes:

calculating, according to the media quality information, the maximum user quality of experience that the media data stream can reach; and
obtaining the delay requirement of the media data stream of the user equipment according to the allowable play time of the media temporarily stored by the player of the user equipment, the user quality of experience target, and the maximum user quality of experience.

An embodiment in a second aspect of the present invention discloses an apparatus for transmitting media data, where the apparatus includes:

a media quality information acquiring module, configured to acquire media quality information, where the media quality information indicates media quality of a media data stream; a user quality of experience target acquiring module, configured to acquire a user quality of experience target of a user equipment; a media data delay calculating module, configured to: according to the media quality information obtained by the media quality information acquiring module and the user quality of experience target of the user equipment obtained by the user quality of experience target acquiring module, obtain a transmission requirement of the media data stream of the user equipment; and a sending module, configured to send, to a data node, the transmission requirement of the media data stream of the user equipment obtained by the media data delay calculating module and the media data stream obtained by the media quality information acquiring module, so that the data node sends the media data stream to the user equipment according to the transmission requirement of the media data stream of the user equipment.

According to the apparatus for transmitting media data in the embodiment in the second aspect of the present invention, on the basis of guarantee of user QoE (Quality of Experience, quality of experience), a scarceness characteristic of wireless resources is fully considered to implement optimization on allocation of the wireless resources, thereby achieving an effect of guaranteeing the user QoE with consumption of as few system resources as possible.

In a first possible implementation manner of the embodiment in the second aspect of the present invention, the media quality information acquiring module includes:

a receiving unit and a parsing unit, where the receiving unit is configured to receive a media presentation description file sent by a server, and the parsing unit is configured to parse the media presentation description file received by the receiving unit to obtain media quality information of each video segment of each code stream in the media data stream;
or
the receiving unit is configured to receive the media data stream, and the parsing unit is configured to parse the media data stream received by the receiving unit to obtain the media quality information of the media data stream.

With reference to a second possible implementation manner of the embodiment in the second aspect of the present invention in the foregoing embodiments, the user quality of experience target acquiring module is specifically configured to:

acquire the user quality of experience target of the user equipment by means of negotiation with the user equipment;

or

acquire the user quality of experience target of the user equipment according to preset subscription information of the user equipment.

With reference to a third possible implementation manner of the embodiment in the second aspect of the present invention in the foregoing embodiments, the transmission requirement includes at least one of the following: a delay requirement and a packet loss requirement.

With reference to a fourth possible implementation manner of the embodiment in the second aspect of the present invention in the foregoing embodiments, when the transmission requirement includes the delay requirement, the media data delay calculating module is specifically configured to:

calculate, according to the media quality information, maximum user quality of experience that the media data stream can reach; and
obtain the delay requirement of the media data stream of the user equipment according to the user quality of experience target and the maximum user quality of experience.

With reference to a fifth possible implementation manner of the embodiment in the second aspect of the present invention in the foregoing embodiments, when the transmission requirement includes the packet loss requirement, the media data delay calculating module is specifically configured to:

calculate, according to the media quality information, maximum user quality of experience that the media data stream can reach; and
obtain the packet loss requirement of the media data stream of the user equipment according to the user quality of experience target and the maximum user quality of experience.

With reference to a sixth possible implementation manner of the embodiment in the second aspect of the present invention in the foregoing embodiments, the apparatus further includes:

a user play status information acquiring module, configured to acquire play status information of the user equipment; and

correspondingly, the media data delay calculating module is specifically configured to obtain the transmission requirement of the media data stream of the user equipment according to the media quality information, the play status information of the user equipment, and the user quality of experience target of the user equipment.

With reference to a seventh possible implementation manner of the embodiment in the second aspect of the present invention in the foregoing embodiments, the media play status information includes allowable play time of media temporarily stored by a player of the user equipment, and the media data delay calculating module is specifically configured to:

calculate, according to the media quality information, the maximum user quality of experience that the media data stream can reach; and

obtain the delay requirement of the media data stream of the user equipment according to the allowable play time of the media temporarily stored by the player of the user equipment, the user quality of experience target, and the maximum user quality of experience.

An embodiment in a third aspect of the present invention discloses a system for transmitting media data, where the transmission system includes:

a server and a base station, where
the base station includes the apparatus for transmitting media data according to any item of the embodiment in the second aspect of the present invention.

A fourth aspect of the present invention discloses a system for transmitting media data, where the transmission system includes:

a server, a base station, and a data network gateway, where
the data network gateway includes the apparatus for transmitting media data according to any item of the embodiment in the second aspect of the present invention.

An embodiment in a fifth aspect of the present invention discloses a system for transmitting media data, where the transmission system includes:

a server, a base station, and a data network gateway, where
the data network gateway includes a media quality information acquiring module and a user quality of experience target acquiring module, where the media quality information acquiring module is configured to acquire media quality information, and the user quality of experience target acquiring module is configured to acquire a user quality of experience target from a user equipment; and

the base station includes a media data delay calculating module, where the media data delay calculating module is configured to obtain a delay requirement of a media data stream of the user equipment according to the media quality information and the user quality of experience target.

With reference to a possible implementation manner of the embodiment in the fifth aspect of the present invention, the data network gateway further includes a user play status information acquiring module, where the user play status information acquiring module is configured to acquire play status information of the user equipment; and correspondingly, the media data delay calculating module is configured to obtain the delay requirement of the media data stream of the user equipment according to the media quality information, the play status information of the user equipment, and the user quality of experience target.

According to the system for transmitting media data in the embodiment in the third, fourth, or fifth aspect of the present invention, on the basis of guarantee of user QoE (Quality of Experience, quality of experience), a scarceness characteristic of wireless resources is fully considered to implement optimization on allocation of the wireless resources, thereby achieving an effect of guaranteeing the user QoE with consumption of as few system resources as possible.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic structural diagram of a wireless communications system;
FIG. 2 is a flowchart of a method for transmitting media data according to an embodiment of the present invention;
FIG. 3 is a flowchart of another method for transmitting media data according to an embodiment of the present invention;
FIG. 4 is a structural diagram of an apparatus for transmitting media data according to an embodiment of the present invention;
FIG. 5 is a structural diagram of a system for transmitting media data according to an embodiment of the present invention;

FIG. 6 is a structural diagram of another system for transmitting media data according to an embodiment of the present invention; and

FIG. 7 is a structural diagram of another system for transmitting media data according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

Wireless communications can provide various services, including voice calls, and web page downloading. A typical wireless communications system or network, such as an LTE (long term evolution, Long Term Evolution) system, provides radio links for a plurality of UEs (user equipment, user equipment) in a cell by using a base station, so as to implement wireless communications. Such a radio connection usually uses a shared radio spectrum. FIG. 1 shows a basic LTE system architecture.

Data transmission may refer to that a user equipment sends a request to a base station or refer to that the base station actively sends data to the user equipment. That a user equipment sends a request is used as an example. The data request is sent to devices such as a serving gateway S-GW and a packet data network gateway P-GW through a base station, and then sent to a server; the server finds related data according to the request of the user equipment, and sends the related data to the base station through the packet data network gateway and the serving gateway; the base station sends the related data to the user equipment, to complete data transmission.

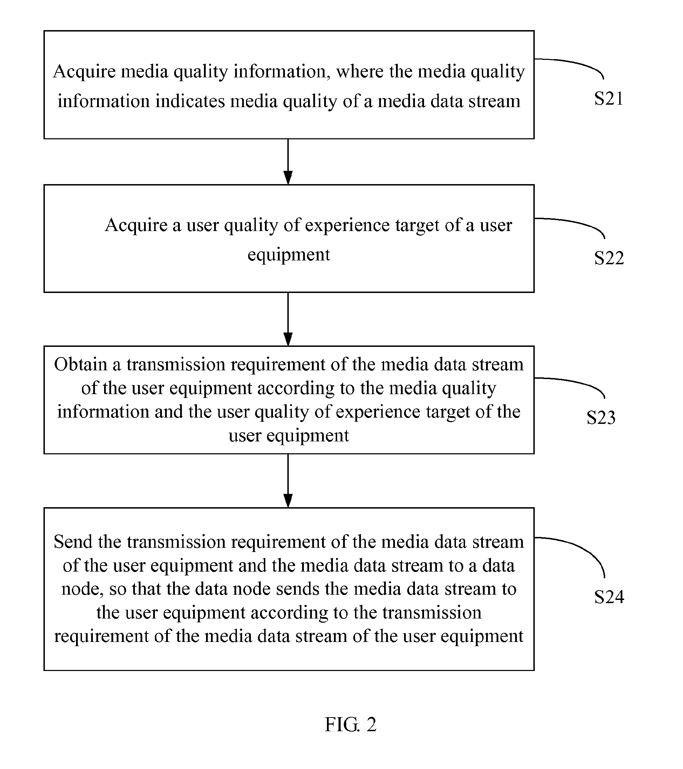

A method for transmitting media data according to an embodiment of the present invention is described below according to FIG. 2. As shown in FIG. 2, the method includes:

S21: Acquire media quality information, where the media quality information indicates media quality of the media data stream.

The acquired media quality information is used to indicate quality of media data, and a measurement parameter thereof may be, for example, a PSNR (Peak Signal to Noise Ratio, peak signal to noise ratio) or the like.

The media quality information may be used to indicate compression quality of the media data, or may be used to indicate quality of experience of the media data.

In an embodiment of the present invention, a specific method for acquiring the media quality information is:

receiving a media presentation description file sent by a media server that stores the media data, where the media presentation description file includes the media quality information of the media data; and parsing the media presentation description file to obtain the media quality information of the media data; or receiving the media data stream first, and then analyzing the media data stream to obtain the media quality information.

In an embodiment of the present invention, it may be understood that, acquiring the media data stream in this step is not a necessary step for acquiring the media quality information, the media quality information may also be acquired in the foregoing manner of parsing the MPD file, and analyzing the media data stream is merely an implementation manner of acquiring the media quality information.

In an embodiment of the present invention, in a DASH (Dynamic Adaptive Streaming over HTTP protocol, Dynamic Adaptive Streaming over HTTP protocol) service application environment, a user terminal first requests a media presentation description file MPD (Media Presentation Description, media presentation description) on a server, and video quality information, such as a PSNR (Peak Signal to Noise Ratio, peak signal to noise ratio) value, of each video segment (segment) in each code stream (representation) can be added to the MPD. The PSNR value may be used to indicate quality of the video segment.

The quality of the media data may be acquired according to the video quality information carried in the MPD; or the media quality information of the media data stream may be obtained by parsing the acquired media data stream.

In a specific embodiment, the media quality information may be acquired by analyzing payload data of the media data stream, for example, may be acquired by analyzing quality information that may be included in a file format or analyzing a bitstream bitstream of video data; or the media quality information may be acquired by using another file. It may be understood that, this embodiment is only an example used to help understand the embodiments of the present invention, and shall not be construed as a specific limitation to the embodiments of the present invention.

S22: Acquire a user quality of experience target of a user equipment.

The user quality of experience target is quality of experience expected by a user, and a measurement parameter thereof may be, for example, a MOS (Mean Opinion Score, mean opinion score) or the like. Acquiring the user quality of experience target of the user includes: acquiring the user quality of experience target of the user by means of negotiation with the user, or acquiring the user quality of experience target of the user according to preset subscription information of the user.

For a DASH service, a QoE (Quality of Experience, quality of experience) function unit on a network may negotiate, according to quality information of an entire video, with a user terminal about a QoE target value of a video service, that is, the quality of experience expected by the user. Because a same video in the DASH service may have a plurality of code streams with different quality, the target value cannot exceed highest quality that each video code stream saved under normal play (that is, play without any loss and any delay) can reach; otherwise, the QoE target cannot be reached.

S23: Obtain a transmission requirement of the media data stream of the user equipment according to the media quality information and the user quality of experience target of the user equipment.

User quality of experience that can be reached when a media video code stream is played without any loss and any delay may be calculated according to the media quality information acquired in S21, such as a PSNR. For example, the user quality of experience is calculated according to the following formula:

$$QoE_0 = k \times (a - b/PSNR)$$

where k, a, and b are all constant coefficients. In an embodiment of the present invention, if k=0.56, a=14.2, and b=280.5, $QoE_0$ is the user quality of experience during the play without any loss and any delay. Another empirical formula may also be used to calculate the user quality of experience, or individualized fine-tuning is performed for a single user equipment.

However, in actual application, actual user quality of experience may also be affected by a transmission delay or a packet loss, and the actual user quality of experience may be calculated by using the following formula:

$$QoE = QoE_0 - k_1 \times delay - k_2 \times packloss ;$$

where k1 and k2 are constants. In an embodiment of the present invention, if $k_1$=0.005, $k_2$=3.6, delay is a delay of a media data packet, and packloss is a transmission packet loss rate of the media data packet, QoE is actual quality of experience sensed by a user. The actual user quality of experience may also be calculated by using a formula related to QoE calculation specified in an international standard, such as the recommendation ITU-T P.1202. To ensure that user quality of experience reaches the user quality of experience target acquired in S21, which is assumed to be $QoE_{obj}$, on the premise that a transmission packet loss rate of a media data packet is zero or is negligible (for example, $10^{-8}$), a delay requirement of the media data packet can be calculate by using the following formula:

$$D = T - P + (QoE_0 - QoE_{obj})/k_1 ;$$

where D indicates a calculated delay of the media data packet, T indicates a corresponding play PTS (Presentation Time Stamp, presentation time stamp) of the data packet in an entire media stream, P indicates a period of time for which current media is already played, $QoE_0$ is user quality of experience during play without any loss and any delay, $QoE_{obj}$ is the user quality of experience target acquired in S22, and $k_1$ is the foregoing constant.

A formula for calculating the delay of the media data packet may be as follows:

$$D = T - P + b \times c^{QoE_0 - QoE_{obj}} ;$$

where D indicates the calculated delay of the media data packet, T indicates the corresponding play PTS (Presentation Time Stamp, presentation time stamp) of the data packet in the entire media stream, P indicates the period of time for which the current media is already played, $QoE_0$ is the user quality of experience during the play without any loss and any delay, $QoE_{obj}$ is the user quality of experience target acquired in S22, and b and c are constants. Based on some statistical data, it may be set that b=10 and c=10.

In a case in which a delay is ensured, for example, D=T-P, that is, the media data packet can be transmitted to a media playing device, such as a media player of the user equipment, before a media playing moment, a network system may also use the following method to calculate a packet loss requirement of the media data packet:

$$ploss_{max} = (QoE_0 - QoE_{obj})/k_2 ;$$

where $ploss_{max}$ indicates a maximum allowable packet loss rate, $QoE_0$ is the user quality of experience during the play without any loss and any delay, $QoE_{obj}$ is the user quality of experience target acquired in S22, and $k_2$ is a constant. A formula for calculating the packet loss rate may be as follows:

$$ploss_{max} = e^{(QoE_0 - QoE_{obj})/c} - 1 ;$$

where $ploss_{max}$ indicates the maximum allowable packet loss rate, $QoE_0$ is the user quality of experience during the play without any loss and any delay, $QoE_{obj}$ is the user quality of experience target acquired in S22, c is a constant, and c=21.

In an embodiment of the present invention, the foregoing formulas need to be executed for each media data packet of each user in a wireless cell; a system may also simultaneously calculate delay and packet loss requirements of media data packets in a case in which some media data packets are lost and it cannot be ensured that the media data packets are transmitted to a media playing device before a media playing moment.

For a formula for calculating a delay and a packet loss, reference may be made to the foregoing formulas, and may also be made to any mathematical model or formula related to QoE, for example, calculation may be performed by using a model or formula related to QoE calculation and specified in the recommendation ITU-T P.1202.

S24: Send the transmission requirement of the media data stream of the user equipment and the media data stream to a data node, so that the data node sends the media data stream to the user equipment according to the transmission requirement of the media data stream of the user equipment.

In an embodiment of the present invention, the data node includes but is not limited to a P-GW (Packet and Data Network Gateway, packet data network gateway), an S-GW (Serving Gateway, serving gateway), an MME (Mobile Managenment Entity, mobility management entity), a PCRF (Policy and Charging Rules Fuction, policy and charging rules function), an HSS/AAA SPR (Service Processor, service processor), a base station, or the like, and the data node mainly implements a function of guaranteeing quality of experience of a user media service.

In an embodiment of the present invention, with reference to the delay or packet loss requirement of the media data packet acquired in S23, the base station may use a transmission algorithm, such as PFS (proportional fairness scheduling, proportional fairness scheduling), to transmit the data packet. The base station may set a queue length threshold. When a queue length of data of a user waiting to be transmitted exceeds the queue length threshold and a media data packet is allowed to be lost, that is, the maximum allowable packet loss rate is not zero, packet loss is executed. During PFS calculation, the base station may perform delay weighting for calculation of each user.

$$w = \log(1.1 + wt/5D);$$

where w is a weighted value for a user, wt is a period of time for which a media data packet of the user has waited, and D is the delay of the media data packet calculated in S23.

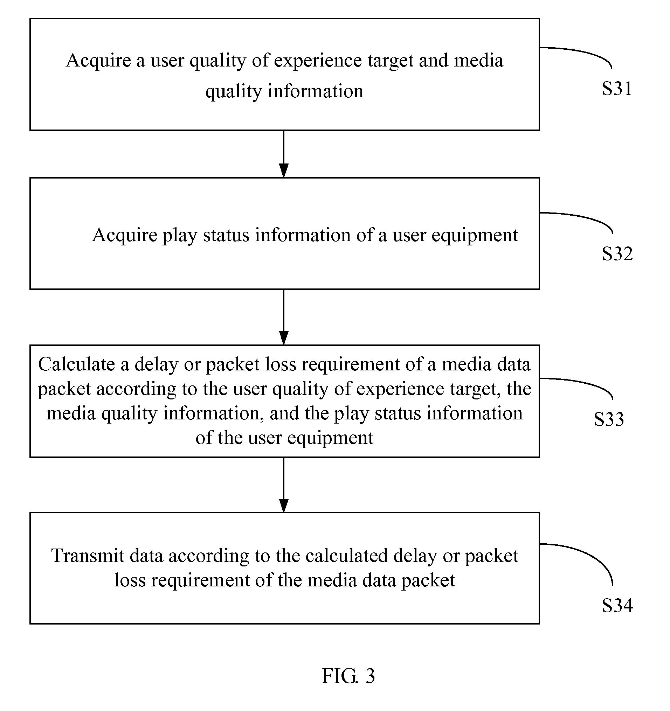

A method for transmitting media data according to an embodiment of the present invention is described below with reference to FIG. 3. As shown in FIG. 3, the method includes:

　　　S31: Acquire a user quality of experience target and media quality information.

For a method of acquiring the foregoing information, reference may be made to the method provided in the embodiment in FIG. 2.

S32: Acquire play status information of a user equipment.

The acquired play status information of the user equipment includes allowable play time of media temporarily stored in a buffer area of a player of the user equipment. In an embodiment of the present invention, the acquired play status information of the user equipment further includes a play status of the player of the user equipment, such as paused, playing, and the like. A manner of acquiring the foregoing information is negotiation with the user equipment, that is, the user equipment reports the foregoing information in a specific time triggering or event triggering manner. The allowable play time of the media temporarily stored in the buffer area of the player of the user equipment may also be estimated by a QoE function unit or another entity, such as a base station, according to a PTS (Presentation Time Stamp, presentation time stamp) of a sent media data packet and provisioning time of a media service. An estimation formula may be as follows:

$$B = T - P;$$

where B is the allowable play time of the media temporarily stored in the buffer area of the player of the user equipment, and T is a maximum value of a PTS (Presentation Time Stamp, presentation time stamp) of a media data packet sent to the user equipment, and P is a period of time for which the media is already played.

S33: Calculate a delay or packet loss requirement of a media data packet according to the user quality of experience target, the media quality information, and the play status information of the user equipment.

User quality of experience that can be reached when a media video code stream is played without any loss and any delay may be calculated according to the media quality information acquired in S31, such as a PSNR. For example, the user quality of experience is calculated according to the following formula:

$$QoE_0 = k \times (a - b/PSNR);$$

where k, a, and b are all constant coefficients; if k=0.56, a=14.2, and b=280.5, $QoE_0$ is the user quality of experience during the play without any loss and any delay. Another empirical formula may also be used to calculate the user quality of experience, or individualized fine-tuning is performed for a single user.

Actual user quality of experience may also be affected by a transmission delay or a packet loss, and the actual user quality of experience may be calculated by using the following formula:

$$QoE = QoE_0 - k_1 \times delay - k_2 \times packloss;$$

where k1 and k2 are constants; based on some statistical analysis, $k_1 = 0.005$, and $k_2 = 3.6$; delay is a delay of a media data packet, packloss is a transmission packet loss rate of the media data packet, and QoE is actual quality of experience sensed by a user. To ensure that user quality of experience reaches the user quality of experience target acquired in S31, which is assumed to be $QoE_{obj}$, on the premise that a transmission packet loss rate of a media data packet is zero or is negligible (for example, $10^{-8}$), a delay requirement of the media data packet can be calculate by using the following formula:

$$D = B + (QoE_0 - QoE_{obj})/k_1;$$

where D indicates a calculated delay of the media data packet, B is the allowable play time of the media temporarily stored in the buffer area of the player of the user equipment and acquired in S32, $QoE_0$ is user quality of experience during play without any loss and any delay, $QoE_{obj}$ is the user quality of experience target acquired in S21, and $k_1$ is the foregoing constant.

A formula for calculating the delay of the media data packet may be as follows:

$$D = B + b \times c^{QoE_0 - QoE_{obj}};$$

where D indicates the calculated delay of the media data packet, B is the allowable play time of the media temporarily stored in the buffer area of the player of the user equipment and acquired in S32, $QoE_0$ is the user quality of experience during the play without any loss and any delay, $QoE_{obj}$ is the user quality of experience target acquired in S21, and b and c are constants. Based on some statistical data, it may be set that b=10 and c=10.

If the user player is in a paused state in the user player status information acquired in S32, a delay of the media data packet may be adjusted according to the foregoing calculated delay, for example, the delay is set to be twice as many as the foregoing calculated delay.

In a case in which a delay is ensured, for example, D=B, that is, a media data packet can be transmitted to a media playing device, such as a media player of the user equipment, before a media playing moment, a system may also use the following method to calculate a packet loss requirement of the media data packet:

$$ploss_{max} = (QoE_0 - QoE_{obj})/k_2;$$

where $ploss_{max}$ indicates a maximum allowable packet loss rate, $QoE_0$ is the user quality of experience during the play without any loss and any delay, $QoE_{obj}$ is the user quality of experience target acquired in S22, and $k_2$ is the foregoing constant. A formula for calculating the packet loss rate may be as follows:

$$ploss_{max} = e^{(QoE_0 - QoE_{obj})/c} - 1;$$

where $ploss_{max}$ indicates the maximum allowable packet loss rate, $QoE_0$ is the user quality of experience during the play without any loss and any delay, $QoE_{obj}$ is the user quality of experience target acquired in S22, c is a constant, and c=21.

The foregoing formulas need to be executed for each media data packet of each user in a wireless cellular cell; a system may also simultaneously calculate delay and packet loss requirements of media data packets in a case in which some media data packets are lost and it cannot be ensured that the media data packets are transmitted to a media playing device before a media playing moment.

For a formula for calculating a delay and a packet loss, reference may be made to the foregoing formulas, and may also be made to any mathematical model or formula related to QoE, for example, calculation may be performed by using a model or formula in the recommendation ITU-T P.1202.

S34: Transmit data according to the calculated delay or packet loss requirement of the media data packet.

In an embodiment of the present invention, the data node may be devices such as a base station, a data network gateway, and a serving gateway. It may be understood that, the examples of the device type of the data node are only used to help understand this embodiment of the present invention, and shall not be construed as a specific limitation to this embodiment of the present invention.

It may be understood that, the foregoing sequence of the operations of acquiring the parameters can be modified, and the sequence provided herein is only an example used to help understand this embodiment of the present invention and is not a limitation to the acquisition of the parameters required for calculation.

According to the method for transmitting media data in this embodiment of the present invention, on the basis of guarantee of user QoE (Quality of Experience, quality of experience), a scarceness characteristic of wireless resources is fully considered to implement optimization on allocation of the wireless resources, thereby achieving an effect of guaranteeing the user QoE with consumption of as few system resources as possible.

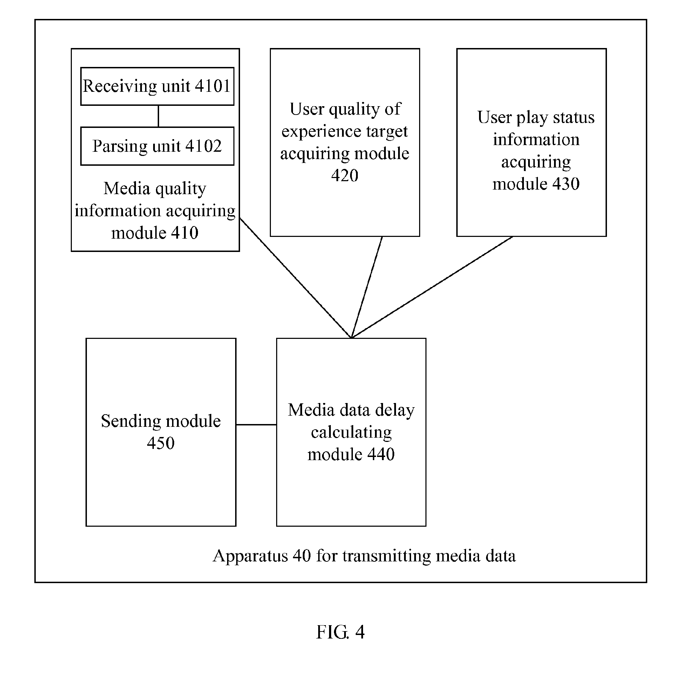

An apparatus 40 for transmitting media data according to an embodiment of the present invention is described below according to FIG. 4. As shown in FIG. 4, the apparatus 40 includes a media quality information acquiring module 410, a user quality of experience target acquiring module 420, a media data delay calculating module 440, and a sending module 450, where the media data delay calculating module 440 is separately connected to the media quality information acquiring module 410, the user quality of experience target acquiring module 420, and the sending module 450.

The media data delay calculating module 440 is configured to: according to media quality information obtained by the media quality information acquiring module 410 and a user quality of experience target of a user equipment obtained by the user quality of experience target acquiring module 420, obtain a transmission requirement of a media data stream of the user equipment.

The sending module 450 is configured to send, to a data node, the transmission requirement of the media data stream of the user equipment obtained by the media data delay calculating module and the media data stream obtained by the media quality information acquiring module, so that the data node sends the media data stream to the user equipment according to the transmission requirement of the media data stream of the user equipment.

For manners of acquiring corresponding information by the media quality information acquiring module 410 and the user quality of experience target acquiring module 420, reference may be made to the foregoing method embodiments and details are not described herein again.

For a manner of calculating a transmission requirement of a media data packet by the media data delay calculating module 440, reference may be made to the foregoing method embodiments and details are not described herein again.

In an embodiment of the present invention, the media quality information acquiring module 410 includes a receiving unit 4101 and a parsing unit 4102, where the receiving unit 4101 is configured to receive a media presentation description file sent by a server, and the parsing unit 4102 is configured to parse the media presentation description file received by the receiving unit 4101 to obtain media quality information of each video segment of each code stream in the media data stream;

or

the receiving unit 4101 is configured to receive the media data stream, and the parsing unit 4102 is configured to parse the media data stream received by the receiving unit 4102 to obtain media quality information of the media data stream.

In an embodiment of the present invention, the apparatus 40 further includes a user play status information acquiring module 430, where the user play status information acquiring module 430 is connected to the media data delay calculating module 440 and is configured to acquire play status information of the user equipment.

For a specific manner of acquiring the play status information of the user equipment, reference may be made to the foregoing method embodiments and details are not described herein again.

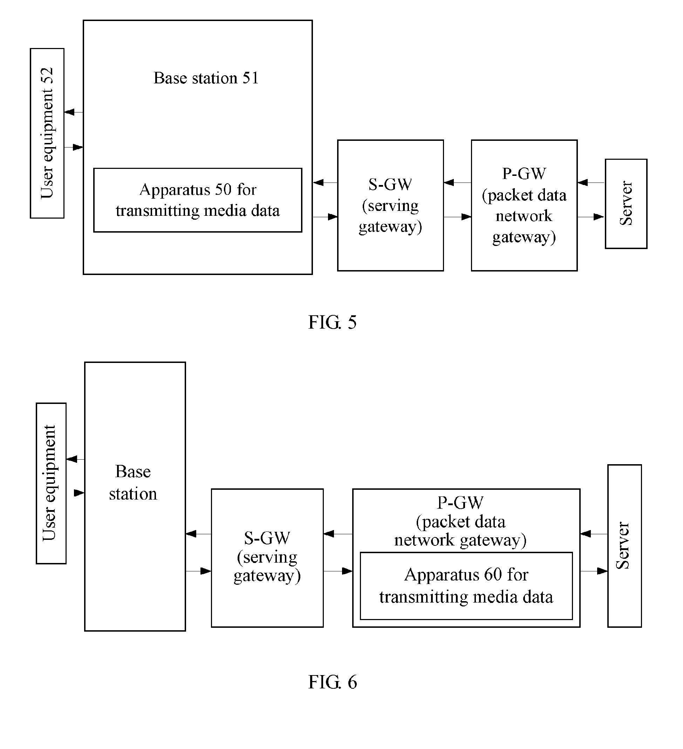

In an embodiment of the present invention, as shown in FIG. 5, an apparatus 50 for ensuring user experience of a media service is added on a base station in an existing LTE system architecture. The apparatus 50 may be the apparatus for ensuring user experience of a media service shown in FIG. 4, the apparatus may be deployed in any functional entity of a core network and an access network, which includes but is not limited to a P-GW (Packet and Data Network Gateway, packet data network gateway), an S-GW (Serving Gateway, serving gateway), an MME, a PCRF (Policy and Charging Rules Fuction, policy and charging rules function), an HSS/AAA SPR, a base station, or and the like, and the apparatus mainly implements a function of guaranteeing quality of experience of a user media service. A specific working process is described below.

A user quality of experience target and media quality information are acquired.

The acquired media quality information may be quality of media data, and a measurement parameter thereof may be, for example, a PSNR (Peak Signal to Noise Ratio, peak signal to noise ratio) or the like. The acquiring of the media quality information may be completed by the media quality information acquiring module 410 in FIG. 4, and this module receives and analyzes a media presentation description file or a media data stream and outputs media quality information.

In an embodiment of the present invention, the media quality information acquiring module 410 includes a receiving unit 4101 and a parsing unit 4102, where the receiving unit 4101 is connected to the parsing unit 4102. The receiving unit 4101 is configured to receive a media presentation description file MPD (Media Presentation Description, media presentation description) sent by a server, where the media presentation description file includes media quality information of each media segment (segment) of each representation (representation) code stream in media, such as a PSNR (Peak Signal to Noise Ratio, peak signal to noise ratio); the parsing unit 4102 is configured to parse the media presentation description file to obtain media quality of the media data.

In an embodiment of the present invention, the media quality information acquiring module 410 is specifically configured to: parse a valid payload of the media data, for example, parse media quality information that may be included in a file format or analyze a bitstream (bitstream) of the media data; and obtain the media quality of the media data according to valid payload.

In an embodiment of the present invention, the user quality of experience target needs to be acquired, this target is quality of experience expected by a user, and a measurement parameter thereof may be, for example, a MOS (Mean Opinion Score) or the like. The acquiring of the user quality of experience target is completed by the user quality of experience target acquiring module 420 in FIG. 4, and this module analyzes user subscription information or negotiates with the user about a QoE target, and outputs the QoE target of the user.

Play status information of a user equipment is acquired.

In an embodiment of the present invention, a user equipment play status information acquiring module 430 is configured to acquire media play status information of the user equipment, which includes but is not limited to allowable play time of media temporarily stored in a buffer area of a player of the user equipment and actions such as pausing and playing performed by the user on the player. This module receives and analyzes delivery information of user video data or player status information fed back by a user terminal, and outputs user player status information.

In an embodiment of the present invention, the user play status information acquiring module 430 includes: a first acquiring unit 4301, configured to acquire initial time and current time of play of a media service of the user equipment, and configured to acquire a video segment of a code stream in the currently transmitted media data stream; and a first calculating unit 4302, configured to obtain play time of the user media service according to the initial time and the current time, and configured to obtain the allowable play time of the media temporarily stored in a buffer of the player of the user equipment according to player time and a PTS (Presentation Time Stamp, presentation time stamp) of the video segment of the code stream in the currently transmitted media data stream.

In an embodiment of the present invention, for a method of calculating the allowable play time of the media temporarily stored in the buffer of the user equipment, reference may be made to the description in the foregoing embodiments and details are not described herein again.

A delay or packet loss requirement of a media data packet is calculated according to the user quality of experience target, the media quality information, and the play status information of the user equipment.

In an embodiment of the present invention, a media data delay calculating module 440 calculates a proper delay or packet loss requirement of the user media data packet in real time according to the media quality information, the user quality of experience target, and the user player status information. For a specific method of calculating the delay or packet loss requirement, reference may be made to the description in the foregoing embodiments and details are not described herein again.

The base station performs transmission according to the calculated delay or packet loss requirement of the media data packet.

In an embodiment of the present invention, a base station 51 performs transmission according to the foregoing calculated delay or packet loss requirement.

For a specific transmission method, reference may be made to the description in the foregoing embodiments and details are not described herein again.

An apparatus 60 that is for ensuring user experience of a media service and is added on a P-GW (packet data network gateway) on a core network is described below with reference to FIG. 6. The apparatus 60 may be the apparatus for ensuring user experience of a media service shown in FIG. 4. The apparatus mainly implements a function of guaranteeing quality of experience of a user media service. A specific working process is described below.

A user quality of experience target and media quality information are acquired.

For the acquiring of the user quality of experience target and the media quality information, reference may be made to the description in the foregoing embodiments and details are not described herein again.

Play status information of a user equipment is acquired.

For the acquiring of the play status information of the user equipment, reference may be made to the description in the foregoing embodiments and details are not described herein again.

A delay or packet loss requirement of a media data packet is calculated according to the user quality of experience target, the media quality information, and the play status information of the user equipment.

For a specific method of calculating the delay or packet loss requirement, reference may be made to the description in the foregoing embodiments and details are not described herein again.

A base station performs transmission according to the calculated delay or packet loss requirement of the media data packet.

After a delay of the media data packet is calculated on the P-GW (packet data network gateway), it takes a period of time to transmit the media data packet to the base station. Therefore, time of the transmission needs to be considered when the base station performs the transmission. Reference may be made to the following specific method:

After the delay requirement of the data packet is calculated on the P-GW, a transmission end time stamp of the data packet is calculated according to a current system time stamp. A calculation formula may be as follows:

$$T_d = T_c + D\,;$$

where $T_d$ is the transmission end time stamp, $T_c$ is the current system time stamp, and D is the delay requirement of the media data packet. The transmission end time stamp may be transmitted with the media data packet from the P-GW to the base station by using a core network transmission protocol, such as the GTP or the PMIP protocol.

The base station calculates the delay requirement of the media data packet according to the transmission end time stamp and the current system time stamp. A calculation formula may be as follows:

$$D = T_d - T_c\,;$$

where $T_d$ is the transmission end time stamp, $T_c$ is the current system time stamp, and D is the delay requirement of the media data packet.

For a specific transmission method, reference may be made to the description in the foregoing embodiments and details are not described herein again.

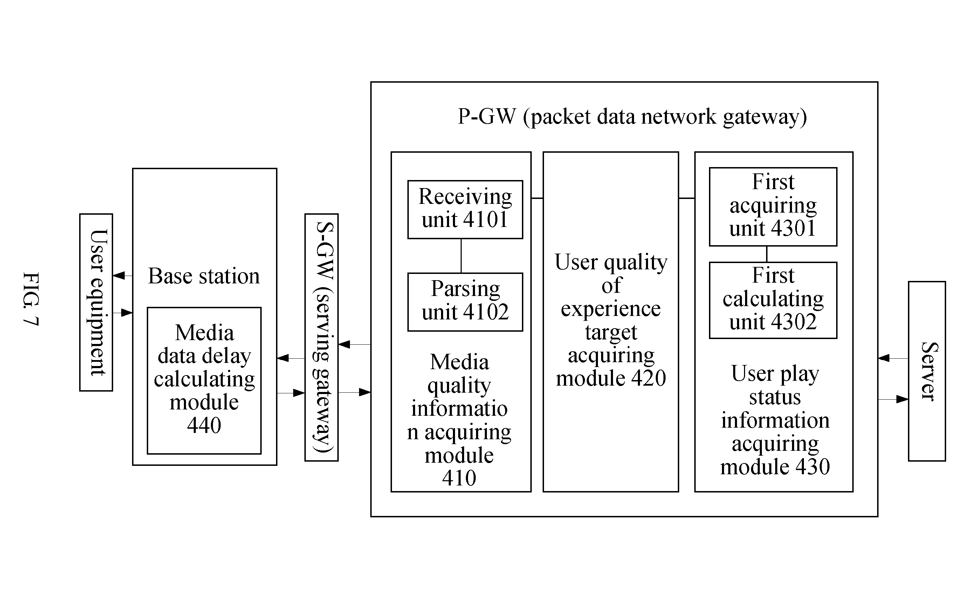

Modules in an apparatus for ensuring user experience of a media service may also be separately deployed on different function entities in an LTE system. With reference to FIG. 7, the following describes a media quality information acquiring module 410, a user quality of experience target acquiring module 420, and a user play status information acquiring module 430 in an apparatus 40 that is for ensuring user experience of a media service and is added on a P-GW (packet data network gateway) on a core network, and a media data delay calculating module 440 in an apparatus 40 that is for ensuring user experience of a media service and is added on a base station. They mainly implement a function of guaranteeing quality of experience of a user media service. A specific working process is described below.

A user quality of experience target and media quality information are acquired.

For the acquiring of the user quality of experience target and the media quality information, reference may be made to the description in the foregoing embodiments and details are not described herein again.

Play status information of a user equipment is acquired.

For the acquiring of the play status information of the user equipment, reference may be made to the description in the foregoing embodiments and details are not described herein again.

A delay or packet loss requirement of a media data packet is calculated according to the user quality of experience target, the media quality information, and the play status information of the user equipment.

The user quality of experience target, the media quality information, and the play status information of the user equipment are acquired on the P-GW, and a media data delay and packet loss calculating module is on the base station. Therefore, the user quality of experience target, the media quality information, and the play status information of the user equipment need to be transmitted to and stored on the base station after being acquired on the P-GW.

For a specific method of calculating the delay or packet loss requirement, reference may be made to the description in the foregoing embodiments and details are not described herein again.

The base station transmits the media data packet according to the calculated delay or packet loss requirement of the media data packet.

For a specific method of transmitting the media data packet, reference may be made to the description in the foregoing embodiments and details are not described herein again.

It may be clearly understood by a person skilled in the art that, for the purpose of convenient and brief description, for a detailed working process of the foregoing base station, apparatus and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely exemplary implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for transmitting media data, wherein the method comprises:

   acquiring media quality information, wherein the media quality information indicates media quality of a media data stream;
   acquiring a user quality of experience target of a user equipment;
   obtaining a transmission requirement of the media data stream of the user equipment according to the media quality information and the user quality of experience target of the user equipment; and
   sending the transmission requirement of the media data stream of the user equipment to a data node, so that the data node sends the media data stream to the user equipment according to the transmission requirement of the media data stream of the user equipment.

2. The transmission method according to claim 1, wherein the acquiring media quality information specifically comprises:

   receiving a media presentation description file sent by a server, parsing the media presentation description file to obtain media quality information of each video segment of each code stream in the media data stream;
   or
   acquiring the media data stream; and
   parsing the acquired media data stream to obtain the media quality information of the media data stream.

3. The transmission method according to claim 1 or 2, wherein the acquiring a user quality of experience target of a user equipment comprises:

   acquiring the user quality of experience target of the user equipment by means of negotiation with the user equipment;
   or
   acquiring the user quality of experience target of the user equipment according to preset subscription information of the user equipment.

4. The transmission method according to any one of claims 1 to 3, wherein the transmission requirement comprises at least one of the following: a delay requirement and a packet loss requirement.

5. The transmission method according to claim 4, wherein when the transmission requirement comprises the delay requirement, the obtaining a transmission requirement of the media data stream of the user equipment according to the media quality information and the user quality of experience target of the user equipment comprises:

   calculating, according to the media quality information, maximum user quality of experience that the media data stream can reach; and
   obtaining the delay requirement of the media data stream of the user equipment according to the user quality of experience target and the maximum user quality of experience.

6. The transmission method according to claim 4, wherein when the transmission requirement comprises the packet loss requirement, the obtaining a transmission requirement of the media data stream of the user equipment according to the media quality information and the user quality of experience target of the user equipment comprises:

   calculating, according to the media quality information, maximum user quality of experience that the media data stream can reach; and
   obtaining the packet loss requirement of the media data stream of the user equipment according to the user quality of experience target and the maximum user quality of experience.

7. The transmission method according to any one of claims 1 to 6, wherein after the acquiring media quality information, the method further comprises:

   acquiring play status information of the user equipment; and
   correspondingly, the obtaining a transmission requirement of the media data stream of the user equipment according to the media quality information and the user quality of experience target of the user equipment comprises: obtaining the transmission requirement of the media data stream of the user equipment according to the media quality information, the play status information of the user equipment, and the user quality of experience target of the user equipment.

8. The transmission method according to claim 7, wherein the media play status information comprises allowable play time of media temporarily stored by a player of the user equipment, and the obtaining the transmission requirement of the media data stream of the user equipment according to the media quality information, the play status information of the user equipment, and the user quality of experience target of the user equipment comprises:

> calculating, according to the media quality information, the maximum user quality of experience that the media data stream can reach; and obtaining the delay requirement of the media data stream of the user equipment according to the allowable play time of the media temporarily stored by the player of the user equipment, the user quality of experience target, and the maximum user quality of experience.

9. An apparatus for transmitting media data, wherein the apparatus comprises:

> a media quality information acquiring module, configured to acquire media quality information, wherein the media quality information indicates media quality of a media data stream;
> a user quality of experience target acquiring module, configured to acquire a user quality of experience target of a user equipment;
> a media data delay calculating module, configured to: according to the media quality information obtained by the media quality information acquiring module and the user quality of experience target of the user equipment obtained by the user quality of experience target acquiring module, obtain a transmission requirement of the media data stream of the user equipment; and
> a sending module, configured to send, to a data node, the transmission requirement of the media data stream of the user equipment obtained by the media data delay calculating module, so that the data node sends the media data stream to the user equipment according to the transmission requirement of the media data stream of the user equipment.

10. The transmission apparatus according to claim 9, wherein the media quality information acquiring module comprises:

> a receiving unit and a parsing unit, wherein the receiving unit is configured to receive a media presentation description file sent by a server, and the parsing unit is configured to parse the media presentation description file received by the receiving unit to obtain media quality information of each video segment of each code stream in the media data stream;
> or
> the receiving unit is configured to receive the media data stream, and the parsing unit is configured to parse the media data stream received by the receiving unit to obtain the media quality information of the media data stream.

11. The transmission apparatus according to claim 9 or 10, wherein the user quality of experience target acquiring module is specifically configured to:

> acquire the user quality of experience target of the user equipment by means of negotiation with the user equipment;
> or
> acquire the user quality of experience target of the user equipment according to preset subscription information of the user equipment.

12. The transmission apparatus according to any one of claims 9 to 11, wherein the transmission requirement comprises at least one of the following: a delay requirement and a packet loss requirement.

13. The transmission apparatus according to claim 12, wherein when the transmission requirement comprises the delay requirement, the media data delay calculating module is specifically configured to:

> calculate, according to the media quality information, maximum user quality of experience that the media data stream can reach; and obtain the delay requirement of the media data stream of the user equipment according to the user quality of experience target and the maximum user quality of experience.

14. The transmission apparatus according to claim 12, wherein when the transmission requirement comprises the packet loss requirement, the media data delay calculating module is specifically configured to:

> calculate, according to the media quality information, maximum user quality of experience that the media data stream can reach; and obtain the packet loss requirement of the media data stream of the user equipment according to the user quality of experience target and the maximum user quality of experience.

15. The transmission apparatus according to any one of claims 9 to 14, wherein the apparatus further comprises:

> a user play status information acquiring module, configured to acquire play status information of the user equipment; and
> correspondingly, the media data delay calculating module is specifically configured to obtain the transmission requirement of the media data stream of the user equipment according to the media quality information, the play status information of the user equipment, and the user quality of experience target of the user equipment.

16. The transmission apparatus according to claim 15, wherein the media play status information comprises allowable play time of media temporarily stored by a player of the user equipment, and the media data delay calculating module is specifically configured to:

calculate, according to the media quality information, the maximum user quality of experience that the media data stream can reach; and obtain the delay requirement of the media data stream of the user equipment according to the allowable play time of the media temporarily stored by the player of the user equipment, the user quality of experience target, and the maximum user quality of experience.

17. A system for transmitting media data, wherein the transmission system comprises:

a server and a base station, wherein the base station comprises the apparatus for transmitting media data according to any one of claims 9 to 16.

18. A system for transmitting media data, wherein the transmission system comprises:

a server, a base station, and a data network gateway, wherein the data network gateway comprises the apparatus for transmitting media data according to any one of claims 9 to 16.

19. A system for transmitting media data, wherein the transmission system comprises:

a server, a base station, and a data network gateway, wherein the data network gateway comprises a media quality information acquiring module and a user quality of experience target acquiring module, wherein the media quality information acquiring module is configured to acquire media quality information, and the user quality of experience target acquiring module is configured to acquire a user quality of experience target from a user equipment; and the base station comprises a media data delay calculating module, wherein the media data delay calculating module is configured to obtain a delay requirement of a media data stream of the user equipment according to the media quality information and the user quality of experience target.

20. The transmission system according to claim 19, wherein the data network gateway further comprises a user play status information acquiring module, wherein the user play status information acquiring module is configured to acquire play status information of the user equipment; and correspondingly, the media data delay calculating module is configured to obtain the delay requirement of the media data stream of the user equipment according to the media quality information, the play status information of the user equipment, and the user quality of experience target.

FIG. 1

Acquire media quality information, where the media quality information indicates media quality of a media data stream — S21

Acquire a user quality of experience target of a user equipment — S22

Obtain a transmission requirement of the media data stream of the user equipment according to the media quality information and the user quality of experience target of the user equipment — S23

Send the transmission requirement of the media data stream of the user equipment and the media data stream to a data node, so that the data node sends the media data stream to the user equipment according to the transmission requirement of the media data stream of the user equipment — S24

FIG. 2

Acquire a user quality of experience target and media quality information — S31

Acquire play status information of a user equipment — S32

Calculate a delay or packet loss requirement of a media data packet according to the user quality of experience target, the media quality information, and the play status information of the user equipment — S33

Transmit data according to the calculated delay or packet loss requirement of the media data packet — S34

FIG. 3

Receiving unit 4101

Parsing unit 4102

Media quality information acquiring module 410

User quality of experience target acquiring module 420

User play status information acquiring module 430

Sending module 450

Media data delay calculating module 440

Apparatus 40 for transmitting media data

FIG. 4

FIG. 5

FIG. 6

FIG. 7

# INTERNATIONAL SEARCH REPORT

| | International application No. |
|---|---|
| | PCT/CN2013/084142 |

## A. CLASSIFICATION OF SUBJECT MATTER

H04L 12/70 (2013.01) i

According to International Patent Classification (IPC) or to both national classification and IPC

## B. FIELDS SEARCHED

Minimum documentation searched (classification system followed by classification symbols)

IPC: H04L 12/-; H04N 7/-

Documentation searched other than minimum documentation to the extent that such documents are included in the fields searched

Electronic data base consulted during the international search (name of data base and, where practicable, search terms used)

WPI, EPODOC, CNPAT, CNKI: video, contro+, quality, media, data, stream, terminal, user, transmit, sen+, QoE, delay, packet s loss, grade, capability, network

## C. DOCUMENTS CONSIDERED TO BE RELEVANT

| Category* | Citation of document, with indication, where appropriate, of the relevant passages | Relevant to claim No. |
|---|---|---|
| X | WO 2009/049676 A1 (ERICSSON HUNGARY LTD.) 23 April 2009 (23.04.2009) description, page 11, the second paragraph to page 13, the first paragraph, page 14, the third paragraph to page 15, the sixth paragraph and figures 1-4, 6 and 7 | 1-20 |
| A | WO 2013/056123 A2 (T-MOBILE USA, INC.) 18 April 2013 (18.04.2013) the whole document | 1-20 |
| A | US 2007/0076754 A1 (KRISHNASWAMY, DILIP) 05 April 2007 (05.04.2007) the whole document | 1-20 |
| A | CN 101115021 A (TENCENT TECHNOLOGY (SHENZHEN) CO LTD) 30 January 2008 (30.01.2008) the whole document | 1-20 |
| A | CN 101621681 A (TENCENT TECHNOLOGY (SHENZHEN) CO LTD) 06 January 2010 (06.01.2010) the whole document | 1-20 |

☐ Further documents are listed in the continuation of Box C.          ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 11 February 2014 (11.02.2014) | 06 March 2014 (06.03.2014) |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer YUE, Yongjuan Telephone No. (86-10) 62413049 |
|---|---|

Form PCT/ISA /210 (second sheet) (July 2009)

## INTERNATIONAL SEARCH REPORT
### Information on patent family members

International application No.

PCT/CN2013/084142

| Patent Documents referred in the Report | Publication Date | Patent Family | Publication Date |
|---|---|---|---|
| WO 2009/049676 A1 | 23.04.2009 | None | |
| WO 2013/056123 A2 | 18.04.2013 | US 2013096904 A1 | 18.04.2013 |
| US 2007/0076754 A1 | 05.04.2007 | US 8098603 B2 | 17.01.2012 |
| | | US 2012113856 A1 | 10.05.2012 |
| | | US 8379552 B2 | 19.02.2013 |
| CN 101115021 A | 30.01.2008 | WO 2008019606 A1 | 21.02.2008 |
| | | CN 101115021 B | 12.05.2010 |
| CN 101621681 A | 06.01.2010 | CN 101621681 B | 29.08.2012 |

Form PCT/ISA /210 (patent family annex) (July 2009)

**EP 2 945 327 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201310203923